(19) Europäisches Patentamt
European Patent Office
Office européen des brevets

(11) EP 0 511 490 B1

(12) EUROPÄISCHE PATENTSCHRIFT

(45) Veröffentlichungstag und Bekanntmachung des Hinweises auf die Patenterteilung:
10.01.1996 Patentblatt 1996/02

(51) Int. Cl.$^6$: C01B 21/068

(21) Anmeldenummer: 92105034.0

(22) Anmeldetag: 24.03.1992

(54) **Verfahren zur Herstellung von feinteiligem kristallinem Siliciumnitrid**

Process for the production of finely divided crystalline silicon nitride

Procédé pour la production de nitrure de silicium cristallisé finement divisé

(84) Benannte Vertragsstaaten:
CH DE FR GB IT LI SE

(30) Priorität: 27.04.1991 DE 4113885

(43) Veröffentlichungstag der Anmeldung:
04.11.1992 Patentblatt 1992/45

(73) Patentinhaber: HOECHST AKTIENGESELLSCHAFT
D-65926 Frankfurt am Main (DE)

(72) Erfinder: Krause, Werner, Dr.
W-5030 Hürth (DE)

(56) Entgegenhaltungen:
EP-A- 0 227 082          EP-A- 0 358 975

**Beschreibung**

Die vorliegende Erfindung betrifft ein Verfahren zur Herstellung von feinteiligem kristallinem Siliciumnitrid mit einer mittleren Korngröße ($d_{50}$) von 0,4 bis 1 μm aus amorphem Siliciumnitrid und/oder amorphem Siliciumnitridimid.

Dicht gesintertes Siliciumnitrid (SSN) ist ein Werkstoff, der sich durch hohe Festigkeit und Korrosionsbeständigkeit auch bei hohen Temperaturen auszeichnet und gegenüber metallischen Werkstoffen mit 3,2 g/cm$^3$ eine relativ geringe Dichte aufweist. Daher ist dicht gesintertes Siliciumnitrid (SSN) ein interessanter Konstruktionswerkstoff für den Motoren- und Turbinenbau.

Dicht gesintertes Siliciumnitrid (SSN) mit den gewünschten Werkstoffeigenschaften wird aus chemisch sehr reinem Siliciumnitrid hergestellt, welches insbesondere aus rundlichen Teilchen mit einer Korngröße von < 1 μm besteht.

Feinteiliges Siliciumnitrid ist nach folgenden Verfahren herstellbar:

a) Direktnitridierung von Siliciumpulver

$$3\ Si + 2\ N_2 \dashrightarrow Si_3N_4$$

b) Carbothermische Reduktion

$$3\ SiO_2 + 6\ C + 2\ N_2 \dashrightarrow Si_3N_4 + 6\ CO$$

c) Siliciumdiimid-Fällung und Zersetzung:

$$SiCl_4 + 6\ NH_3 \dashrightarrow Si(NH)_2 + 4\ NH_4Cl\ \ 3\ Si(NH)_2 \dashrightarrow Si_3N_4 + 2\ NH_3$$

d) Gasphasenreaktion

$$3\ SiCl_4 + 4\ NH_3 \dashrightarrow Si_3N_4 + 4\ HCl$$

Handelsübliche Siliciumnitridpulver besitzen spezifische Oberflächen (BET) von 1 bis 15 m$^2$/g und mittlere Korngrößen ($d_{50}$) von 0,4 bis 1 μm. Die mittlere Korngröße wurde mittels ® SediGraph 5000 ET der Firma Micromeritits Instrument Corp., Norcross, Georgia, USA, bestimmt.

Es ist allgemein bekannt, bei Kristallisationsvorgängen durch den Zusatz von Impfkristallen den Kristallisationsablauf zu steuern. Auch bei der Kristallisation von amorphem Siliciumnitrid wurde die Zumischung geringer Mengen kristallisiertes Siliciumnitrid vorgeschlagen. Hierdurch sollte der Entstehung von Whiskern entgegengewirkt werden und das $\alpha/\beta$-Phasenverhältnis zugunsten von $\alpha$-Si$_3$N$_4$ verschoben werden, vgl. EP-A 0 227 082. Bei der Herstellung von Siliciumnitrid nach dem carbothermischen Verfahren wurde der Zusatz von kristallinen Siliciumnitrid zur Beeinflussung der Morphologie und der Umsatzrate vorbeschrieben, vgl. H. Inoue et al., J. Amer. Cer. Soc. 65, C-205 (1982).

Ziel und Aufgabe der vorgelegten Erfindung ist es, ein Verfahren anzugeben, wie man ein feinteiliges kristallines Siliciumnitrid aus amorphem Siliciumnitrid und/oder Siliciumnitridimid herstellen kann. Das feinteilige kristalline Siliciumnitrid soll eine Korngröße von < 1 μm haben.

Die Aufgabe konnte überraschend dadurch gelöst werden, daß man das Aufmahlen des amorphen Siliciumnitrids und/oder des amorphen Siliciumnitridimids zusammen mit kristallinem Siliciumnitrid einer Kristallitgröße von 0,040 bis 0,060 μm durchführt und dieses aufgemahlene Siliciumnitrid-Gemenge in Stickstoffatmosphäre auf eine Temperatur von 1100 bis 1600 °C erhitzt.

Siliciumnitrid mit einer Kristallitgröße von 0,040 bis 0,060 μm ist als Impfmaterial zur Herstellung von kristallinem Siliciumnitrid aus amorphen Siliciumnitrid besonders geeignet, da von diesem Impfmaterial nur bis zu 4 Gew.-% eingesetzt zu werden brauchen. Anstelle des gemeinsamen Aufmahlens des amorphen und kristallinen Siliciumnitrids kann auch eine Homogenisierung durch Vermischen in trockenen Zustand oder in Suspension erfolgen. Das dann erhaltene Endprodukt ist jedoch gröber.

Das Verfahren gemäß der Erfindung kann weiterhin wahlweise auch noch dadurch ausgestaltet sein, daß man

a) das Aufmahlen des amorphen Siliciumnitrids zusammen mit einem kristallinen Siliciumnitrid durchführt, welches durch Erhitzen auf 1100 bis 1600 °C in einer Stickstoffatmosphäre eines Reaktionsproduktes aus Siliciumnitrid und/oder Siliciumnitridimid mit feuchtem Gas oder wasserhaltigem Lösemittel gemäß der Arbeitsweise der DE-P 41 13 884.8 erhalten wird;

b) das amorphe Siliciumnitrid und/oder amorphe Siliciumnitridimid sowie das zugemischte kristalline Siliciumnitrid zusammen in einem wasserfreien, organischen Lösemittel aufmahlt und das wasserfreie, organische Lösemittel nach dem Aufmahlen entfernt;

c) zu 100 Gew.-Teilen amorphen Siliciumnitrid und/oder amorphen Siliciumnitridimid 0,1 bis 4 Gew.-Teile kristallines Siliciumnitrid vor dem Aufmahlen zumischt;

d) die Erhitzung des Siliciumnitrid-Gemenges mit einer Aufheizgeschwindigkeit von höchstens 10 °C/Minute ab 1100 °C vornimmt;

e) das Siliciumnitrid-Gemenge oberhalb der Kristallisationstemperatur des $\alpha$-Siliciumnitrids oberhalb von 1100 °C über einen Zeitraum von 30 bis 1000 Minuten tempert;

f) als wasserfreies, organisches Lösemittel beim Aufmahlen ein Paraffin oder Trichlortrifluorethan einsetzt.

Das amorphe Siliciumnitrid und/oder amorphe Siliciumnitridimid kann beispielsweise nach der Arbeitsweise der Patentanmeldung DE-P 40 37 449.1 hergestellt werden. Aus diesem amorphen Siliciumnitrid und/oder amorphe Siliciumnitridimid kann beispielsweise ein kristallines Siliciumnitrid mit einer Kristallitgröße von 0,040 bis 0,060 µm dadurch hergestellt werden,

daß man amorphes Siliciumnitrid und/oder amorphes Siliciumnitridimid in Oberflächenkontakt mit a) wasserdampfhaltigem Gas oder b) wasserhaltigen Lösemitteln bringt und das Oberflächenkontaktierte amorphe Siliciumnitrid und/oder Siliciumnitridimid unter Stickstoffatmosphäre mit einer Aufheizgeschwindigkeit von mindestens 1°C/Minute bis oberhalb der Kristallisationstemperatur von alpha-Siliciumnitrid, die oberhalb von 1100°C liegt, aufheizt.

Bestimmung der Kristallitgröße:

Die Kristallitgröße des Siliciumnitrids wird aus Röntgendiffraktometeraufnahmen ermittelt. Aufgrund der geringen Kristallitgröße treten beim kristallinen Siliciumnitrid sehr deutliche Reflexverbreiterungen auf. Die Bestimmung der Kristallitgröße des Siliciumnitrids erfolgt durch Messung der Halbwertsbreite am Reflex (201) nach der Formel, vergl. H. Krischner "Einführung in die Röntgenstrukturanalyse", 3. Aufl., Vieweg-Verlag (1987):

$$D = \frac{\lambda \cdot 57{,}3}{1000 \cos \theta \cdot \beta^{1/2}}$$

D: Kristallitgröße in µm
$\lambda$: Wellenlänge CuK $\alpha$ (0,15406 nm)
$\theta$: Beugungswinkel (in Grad $\theta$ für Reflex (201) = 15,50°
$\beta^{1/2}$: Reflexbreite in Höhe der halben Maximalintensität (in Grad $\theta$ )

Die Bestimmung der spezifischen Oberfläche (BET) erfolgte nach der Methode, wie sie in "Z. Anal. Chem.", Bd. 238 (1968), Seiten 187 bis 193, abgedruckt ist.

Das Aufmahlen des Siliciumnitrids kann in jedem geeigneten Mahlapparat, beispielsweise einem Attritor, einer Kugelmühle, einer Strahlmühle oder einer Ringspaltkugelmühle erfolgen.

Das Aufmahlen des amorphen Siliciumnitrids und/oder Siliciumnitridimids mit dem kristallinen Siliciumnitrid der Kristallitgröße von 0,040 bis 0,060 µm ist für die Korngröße des Endproduktes entscheidend. Mit zunehmender Homogenisierung der amorphen und kristallinen Siliciumnitrid-Anteile nimmt die Korngröße des Endproduktes ab. Damit ist eine gezielte Einstellung der gewünschten Korngröße des Endproduktes möglich.

Mit dem erfindungsgemäß hergestellten Siliciumnitrid wird ein gesintertes Siliciumnitrid (SSN) mit hohen Bruchspannungen erhalten.

Die Erfindung wird durch die folgenden Beispiele näher erläutert:

Synthese 1:

Herstellung des amorphen Siliciumnitrids und/oder Siliciumnitridimids nach der Arbeitsweise der DE-P 40 37 449.1.

In einem senkrecht stehenden Reaktionsbehälter, der in seinem unteren Teil als Konus ausgebildet ist und wo von der Konusspitze ein mit einem Kugelhahn verschlossenes Rohr abgeht, wird in die an die Konusspitze angesetzte erste Leitung ein Siliciumtetrachlorid-Stickstoff-Gasgemisch eingeleitet, welches durch Durchleiten von 200 l/h Stickstoff durch auf ca. 25 °C gehaltenes Siliciumtetrachlorid erhalten wird. In den oberen Teil des Reaktionsbehälters strömen über eine andere Leitung 450 l/h getrocknetes Ammoniakgas ein. Bei teilweise geöffneten Kugelhahn an der Konusspitze fallen 0,8 kg/h Siliciumtetrachlorid-Ammoniak-Reaktionsprodukt in einen Sammelbehälter.

Nach Erhitzen des Siliciumtetrachlorid-Ammoniak-Reaktionsproduktes im Glühofen auf 1000 °C in Ammoniak-Atmosphäre wird ein amorphes Siliciumnitrid mit Teilchengrößen von 5 bis 10 µm erhalten, dessen Chlorgehalt 0,16 Gew.-% und Kohlenstoffgehalt < 0,06 Gew.-% beträgt und eine spezifische Oberfläche (BET) von 350 m²/g hat.

Dieses Produkt wird mit S 1 bezeichnet.

Synthese 2:

Herstellung des kristallinen Siliciumnitrids mit einer Kristallitgröße von 0,052 µm nach der Arbeitsweise der Patentanmeldung DE-P 4113884.8.

100 g des Produktes S 1 werden 6,5 Stunden lang feuchter Luft ausgesetzt. Dabei tritt eine Gewichtszunahme von 1,6 g ein. Anschließend wird das Pulver in einem Tiegelofen unter Stickstoffatmosphäre mit einer Aufheizgeschwindigkeit von 10 °C/Min. auf 1480 °C aufgeheizt und 1 Stunde bei dieser Temperatur getempert. Das nach dem Abkühlen entnommene vollständig kristalline Siliciumnitrid hat eine spezifische Oberfläche (BET) von 34 m$^2$/g, die röntgenographische Phasenanalyse ergibt 92 % $\alpha$-Si$_3$N$_4$ und 8 % $\beta$-Si$_3$N$_4$. Aus der Reflexverbreiterung wird eine Kristallitgröße von 0,052 µm ermittelt.

Das Produkt wird mit S 2 bezeichnet.

Beispiel 1:

130 g Produkt S 1 (amorphes Siliciumnitrid) wird in 1,3 l trockenen Hexan suspendiert und zusammen mit 5 g Produkt S 2 (kristallines Siliciumnitrid) in einem Attritor mit Si$_3$N$_4$-Mahlkörpern 3 Stunden gemahlen. Nach dem Abdestillieren des Hexans wird das aufgemahlene Siliciumnitrid-Gemenge in einen Graphit-Tiegel gefüllt, in einem Tiegelofen unter Stickstoffatmosphäre mit einer Aufheizgeschwindigkeit von 2 °C/Minute auf 1450 °C aufgeheizt und 3 Stunden bei dieser Temperatur getempert. Das nach dem Abkühlen entnommene vollständig kristalline Siliciumnitrid hat folgende analytischen Werte:

1,2 Gew.-% Sauerstoff, 0,04 Gew.-% Kohlenstoff,
Phasenverhältnis: 98 % $\alpha$-Si$_3$N$_4$ und 2 % $\beta$-Si$_3$N$_4$,
mittlere Korngröße (d$_{50}$): 0,82 µm.

Vergleichsbeispiel 2:

Es wird wie in Beispiel 1 verfahren, jedoch wird das Produkt S 1 (amorphes Siliciumnitrid) mit 5 g eines handelsüblichen, kristallinen Siliciumnitrids mit einer Kristallitgröße von 0,075 µm aufgemahlen. Nach der Abkühlung wird eine Korngröße (d$_{50}$) von 1,30 µm ermittelt.

Beispiel 3:

Es wird wie in Beispiel 1 verfahren, jedoch werden 100 g Produkt S 1 (amorphes Siliciumnitrid) mit 1,0 g Produkt S 2 (kristallines Siliciumnitrid) aufgemahlen. Nach der Abkühlung wird eine mittlere Korngröße (d$_{50}$) von 0,98 µm ermittelt.

Beispiel 4:

Es wird wie in Beispiel 1 verfahren, jedoch wird die Mahldauer auf 6 Stunden ausgedehnt. Nach der Abkühlung wird eine mittlere Korngröße (d$_{50}$) von 0,68 µm ermittelt.

Vergleichsbeispiel 5:

Es wird wie in Beispiel 1 verfahren, jedoch wird nur Produkt S 1 (amorphes Siliciumnitrid) 3 Stunden lang aufgemahlen. Nach der Abkühlung wird eine mittlere Korngröße (d$_{50}$) von 2,5 µm ermittelt.

**Patentansprüche**

1. Verfahren zur Herstellung von feinteiligem kristallinem Siliciumnitrid mit einer mittleren Korngröße (d$_{50}$) von 0,4 bis 1,0 µm durch Aufmahlen und Erhitzen von amorphem Siliciumnitrid und/oder amorphem Siliciumnitridimid, <u>dadurch gekennzeichnet</u>, daß man das Aufmahlen des amorphen Siliciumnitrids und/oder des amorphen Siliciumnitridimids zusammen mit kristallinem Siliciumnitrid einer Kristallitgröße von 0,040 bis 0,060 µm durchführt und dieses aufgemahlene Siliciumnitridgemenge mit einer Aufheizgeschwindigkeit von höchstens 10 °C/Minute ab 1100 °C in Stickstoffatmosphäre auf eine Temperatur von 1100 bis 1600 °C erhitzt.

2. Verfahren nach Anspruch 1, <u>dadurch gekennzeichnet</u>, daß man das Aufmahlen des amorphen Siliciumnitrids zusammen mit einem kristallinen Siliciumnitrid durchführt, welches dadurch erhalten wurde, daß man amorphes Siliciumnitrid und/oder amorphes Siliciumnitridimid in Oberflächenkontakt mit

a) wasserdampfhaltigem Gas oder

b) wasserhaltigen Lösemitteln bringt

und das oberflächenkontaktierte amorphe Siliciumnitrid und/oder amorphe Siliciumhitridimid unter Stickstoffatmosphäre mit einer Aufheizgeschwindigkeit von mindestens 1 °C/Minute bis oberhalb der Kristallisationstemperatur von $\alpha$-Siliciumnitrid, die oberhalb von 1100 °C liegt, aufheizt.

3. Verfahren nach einem der Ansprüche 1 oder 2, dadurch gekennzeichnet, daß man das amorphe Siliciumnitrid und/oder amorphe Siliciumnitridimid sowie das zugemischte kristalline Siliciumnitrid zusammen in einem wasserfreien, organischen Lösemittel aufmahlt und das wasserfreie, organische Lösemittel nach dem Aufmahlen entfernt.

4. Verfahren nach einem der Ansprüche 1 bis 3, dadurch gekennzeichnet, daß man zu 100 Gew.-Teilen amorphem Siliciumnitrid und/oder amorphem Siliciumnitridimid 0,1 bis 4 Gew.-Teile kristallines Siliciumnitrid vor dem Aufmahlen zumischt.

5. Verfahren nach einem der Ansprüche 1 bis 4, dadurch gekennzeichnet, daß man das aufgemahlene Siliciumnitrid-Gemenge oberhalb der Kristallisationstemperatur des $\alpha$-Siliciumnitrids oberhalb von 1100 °C über einen Zeitraum von 30 bis 1000 Minuten tempert.

6. Verfahren nach Anspruch 3, dadurch gekennzeichnet, daß man als wasserfreies, organisches Lösemittel beim Aufmahlen ein Paraffin oder Trichlortrifluorethan einsetzt.

**Claims**

1. A process for the preparation of finely divided crystalline silicon nitride having a median particle size ($d_{50}$) of 0.4 to 1.0 $\mu$m by milling and heating amorphous silicon nitride and/or amorphous silicon nitridoimide, which comprises carrying out milling of the amorphous silicon nitride and/or of the amorphous silicon nitridoimide together with crystalline silicon nitride having a crystallite size of 0.040 to 0.060 $\mu$m and heating this milled silicon nitride mixture in a nitrogen atmosphere to a temperature of 1100 to 1600°C at a heating rate of at most 10°C/minute from 1100°C onwards.

2. The process as claimed in claim 1, wherein milling of the amorphous silicon nitride is carried out together with a crystalline silicon nitride obtained by bringing amorphous silicon nitride and/or amorphous silicon nitridoimide into surface contact with

a) steam-containing gas or

b) water-containing solvents

and heating the surface-contacted amorphous silicon nitride and/or amorphous silicon nitridoimide in a nitrogen atmosphere at a heating rate of at least 1°C/minute up to above the crystallization temperature of $\alpha$-silicon nitride, which is above 1100°C.

3. The process as claimed in either of claims 1 and 2, wherein the amorphous silicon nitride and/or amorphous silicon nitridoimide and the admixed crystalline silicon nitride are milled together in an anhydrous, organic solvent and the anhydrous, organic solvent is removed after milling.

4. The process as claimed in any one of claims 1 to 3, wherein 0.1 to 4 parts by weight of crystalline silicon nitride are admixed to 100 parts by weight of amorphous silicon nitride and/or amorphous silicon nitridoimide before milling.

5. The process as claimed in any one of claims 1 to 4, wherein the milled silicon nitride mixture is heat-treated above the crystallization temperature of $\alpha$-silicon nitride, which is above 1100°C, for a period of 30 to 1000 minutes.

6. The process as claimed in claim 3, wherein the anhydrous, organic solvent used during milling is a paraffin or trichlorotrifluoroethane.

**Revendications**

1. Procédé de préparation d'un nitrure de silicium cristallisé en fines particules, à une dimension de grain moyenne $d_{50}$ de 0,4 à 1,0 $\mu$m par broyage et chauffage d'un nitrure de silicium amorphe et/ou d'un nitrure-imidure de silicium amorphe, caractérisé en ce que l'on procède au broyage du nitrure de silicium amorphe et/ou du nitrure-imidure de silicium amorphe avec du nitrure de silicium cristallisé à une dimension de cristallite de 0,040 à 0,060 μm et on chauffe ce mélange de nitrures de silicium broyé à une vitesse de réchauffement de 10°C/min au maximum à partir de 1 100°C en atmosphère d'azote jusqu'à une température de 1 100 à 1 600°C.

2. Procédé selon la revendication 1, caractérisé en ce que l'on broie le nitrure de silicium amorphe avec un nitrure de silicium cristallisé qui a été obtenu en mettant du nitrure de silicium amorphe et/ou du nitrure de silicium amorphe en contact en surface avec

    a) un gaz contenant de la vapeur d'eau ou
    b) un solvant contenant de l'eau,

et en chauffant le nitrure de silicium amorphe et/ou le nitrure-imidure de silicium amorphe, sous ce contact, en atmosphère d'azote, à une vitesse de réchauffement d'au moins 1°C/min jusqu'à une température supérieure à la température de cristallisation de l'$\alpha$-nitrure de silicium, laquelle est supérieure à 1 100°C.

3. Procédé selon une des revendications 1 ou 2, caractérisé en ce que l'on broie le nitrure de silicium amorphe et/ou le nitrure-imidure de silicium amorphe et le nitrure de silicium cristallisé ajouté avec un solvant organique anhydre et, après broyage, on élimine le solvant organique anhydre.

4. Procédé selon une des revendications 1 à 3, caractérisé en ce que, à 100 parties en poids de nitrure de silicium amorphe et/ou de nitrure-imidure de silicium amorphe, on mélange avant le broyage 0,1 à 4 parties en poids de nitrure de silicium cristallisé.

5. Procédé selon une des revendications 1 à 4, caractérisé en ce que l'on chauffe le mélange des nitrures de silicium broyé au-dessus de la température de cristallisation de l'$\alpha$-nitrure de silicium et au-dessus de 1 100°C pendant une durée de 30 à 1 000 minutes.

6. Procédé selon la revendication 3, caractérisé en ce que, au broyage, on utilise en tant que solvant organique anhydre une paraffine ou du trichlorotrifluoréthane.